# EUROPEAN PATENT SPECIFICATION

(11) **EP 0 622 382 B1**
(45) Date of publication and mention of the grant of the patent: **12.12.2001**
(21) Application number: 94870052.1
(22) Date of filing: 23.03.1994
(51) Int. Cl.: C08F 210/06, C08F 4/609

(54) **A process for increased randomness in co-polymerization of olefins**
Verfahren zur Verbesserung der statistischen Verteilung bei der Kopolymerisation von Olefinen
Procédé pour améliorer la distribution statistique dans la copolymérisation des oléfins

(30) Priority: 31.03.1993 US 40958
(43) Date of publication of application: 02.11.1994
(73) Proprietor: FINA TECHNOLOGY, INC., Houston, Texas 77267-4412 (US)
(72) Inventor: Shamshoum, Edwar, Houston, Texas 77062 (US); Rauscher, David, Webster, Texas 77598 (US)
(74) Representative: Leyder, Francis

(56) References cited:
- EP-A- 0 360 491
- EP-A- 0 531 834
- CHEMICAL ABSTRACTS, vol. 105, no. 12, 22 September 1986, Columbus, Ohio, US; abstract no. 98139, TOYODA ET AL 'propylene random copolymers' & JP-A-61 069 815 (MITSUI PETROCHEMICAL IND) 10 April 1986
- CHEMICAL ABSTRACTS, vol. 116, no. 22, 1 June 1992, Columbus, Ohio, US; abstract no. 215119, KIOKA ET AL. 'PREPARATION OF RANDOM PROPYLENE COPOLYMERS' & JP-A-3 294 309 (MITSUI PETROCHEMICAL IND) 25 December 1991

## Description

### BACKGROUND

TECHNICAL FIELD : The present invention provides a process for the co-polymerization of olefins that include prepolymerization of a conventional supported Ziegler-Natta catalyst to increase the randomness of ethylene-propylene copolymer.

DESCRIPTION OF PRIOR ART : Catalysts for the polymerization/copolymerization of olefins are well known in the art. Typically, these catalysts include a Ziegler-Natta type polymerization catalyst component; a co-catalyst, usually an organoaluminum compound; and an electron donor compound. Examples of such catalysts are shown in the following U.S. Patents: 4,107,413; 4,294,721; 4,439,540; 4,115,319; 4,,220,554; 4,460,701; and 4,562,173; in European Patents : EP-0531,834; and EP-0360491; and in Japanese Patents : JP-A-61069815; and JP-A-3294309.

A Ziegler-Natta type polymerization catalyst is basically a complex derived from a halide of a transition metal, for example, titanium, chromium or vanadium with a metal hydride and/or a metal alkyl that is typically an organoaluminum compound.

The catalyst is usually comprised of a titanium halide supported on a magnesium compound complexed with an alkylaluminum. An electron donor may be added for stereoselectivity control.

A Ziegler-Natta catalyst may be pre-polymerized to improve the performance of the catalyst. Generally, a prepolymerization process is effected by contacting a small amount of monomer with the catalyst after the catalyst has been contacted with the co-catalyst and the electron donor. An in situ pre-polymerization process is described in U.S. Patent No. 4,767,735. As provided in this disclosure, a carrier stream for the catalyst is provided, the catalyst is contacted with the co-catalyst or organoaluminum compound, the catalyst is contacted with the electron donor, the catalyst is contacted with a relatively small amount of the total amount of monomer to be polymerized, the catalyst passes through a tubular reactor, and the carrier stream introduces the pre-polymerized catalyst into the polymerization reaction zone. The electron donor may be contacted with the catalyst simultaneously with the co-catalyst. A polymer product may then be withdrawn from the reactor. As disclosed in U.S. Patent No. 5, 122,583, an ex situ prepolymerized catalyst may also be used in this process.

It would be advantageous to control properties of the polymer product through the variation of a process variable or modification of the catalyst system. Specifically, if an increase in randomness of ethylene-propylene co-polymer could be obtained by use of a defined group of compounds in a catalyst system without other changes in the process or catalyst system, it would be a beneficial tool in the co-polymerization of ethylene and propylene.

### SUMMARY OF THE INVENTION

The present invention provides a process for the co-polymerization of propylene and ethylene wherein the process includes prepolymerizing a catalyst which results in significant increases in the randomness of ethylene incorporation in co-polymerization of propylene and ethylene. The catalyst is a conventional supported heterogeneous Ziegler-Natta catalyst component for the co-polymerization of ethylene and propylene, a co-catalyst which is an organoaluminum compound and, optionally, an external electron donor or selectivity control agent which is a organosilicon compound. The preferred organoaluminum co-catalyst is an alkylaluminum, most preferably triethylaluminum (TEAl). Preferred electron donors are of the general formula SiRₘ(OR")₄₋ₘ where R is an alkyl group, a cycloalkyl group, an aryl group or a vinyl group, R" is an alkyl group, m is 0-4, R may be the same or different, R" may be the same or different. An example of an electron donor is cyclohexylmethyldimethoxysilane (CMDS).

This invention provides a process for the co-polymerization of olefins. The process comprises: contacting the conventional supported Ziegler-Natta catalyst component with an organoaluminum compound, preferably with a trialkylaluminum; contacting the catalyst with an electron donor either simultaneously with or after contact with the organoaluminum, the electron donor being a silane compound as described by the formula above; and introducing the catalyst into a polymerization reaction zone containing the monomers and, optionally, additional organoaluminum compound and electron donor. The catalyst must be prepolymerized by contacting a small amount of one monomer with the catalyst before introducing the catalyst into the polymerization reaction zone.

Due to higher donor level and the slurry process used in the copolymerization in the Examples below compared to homopolymerization using a bulk process, the attributes of the catalyst (efficiency, xylene solubles) are not the same for copolymerization as for homopolymerization.

### DETAILED DESCRIPTION OF THE INVENTION

The present invention relates to the prepolymerization of a particular type of catalyst for use in the co-polymerization of propylene.
This prepolymerization results in a catalyst system that produces a co-polymer product with significantly higher randomness than provided by other catalysts as illustrated by the comparative examples included below.
These and other beneficial advantages will become more apparent from the following detailed description of the invention and the accompanying examples.

It has been discovered that prepolymerizing a conventional supported Ziegler-Natta catalyst significantly enhances the catalytic properties of these catalysts in the copolymerization of olefins, especially ethylene with propylene.

The catalyst is coated with a polymer coating wherein the weight ratio of polymer coating to catalyst is less than 10 to 1, preferably 5 to 1.

The catalyst component preferably comprises a compound of the general formula MR⁺x where M is a transition metal, R⁺ is a halogen or a hydrocarbyloxy and x is the valence of the metal. Preferably, M is a Group IVB, VB or VIB metal, more preferably a Group IVB, and most preferably titanium. Preferably, R⁺ is chlorine, bromine, an alkoxy or a phenoxy, more preferably chlorine or ethoxy and most preferably, chlorine. Illustrative examples of the transition metal compound catalyst components are TiCl₄, TiBr₄, TiI₄, Ti(OC₂H₅)₃Cl, Ti(OC₂H₅)Cl₃, Ti(OC₃H₇)₂Cl₂, Ti(OC₄H₉)₃Cl, Ti(OC₆H₁₃)₂Cl₂, Ti(OC₈H₁₇)₂Br₂ and Ti(OC₁₂H₂₅)Cl₃ with TiCl₄ being preferred. Mixtures of the transition metal compounds may be used. No restriction on the number of transition metal compounds is made as long as at least one transition metal compound is present.

The support should be an inert solid which is chemically unreactive with any of the components of the conventional Ziegler-Natta catalyst. The support is preferably a magnesium compound. Examples of the magnesium compounds which are to be used to provide a support source for the catalyst component are magnesium halides, dialkoxymagnesiums, alkoxymagnesium halides, magnesium oxyhalides, dialkylmagnesiums, magnesium oxide, magnesium hydroxide, and carboxylates of magnesium.

In addition to those listed in the patents above, other Ziegler-Natta catalysts for the polymerization of olefins which can be used in the present invention are disclosed in U.S. Patent Nos. 3,574,138; 3,642,746; 4,069,169; 4,226,741; 4,636,486; 4,816,433; 4,839,321 and 4,927,797.

The co-catalyst included in the present invention are alkylaluminum compounds such as those described in the formula AlR*₃ where R* is an alkyl of from 1-8 carbon atoms or a halogen and R* may be the same or different with at least one R* being an alkyl. Preferably, the co-catalyst is a trialkylaluminum or a dialkyl aluminum halide. Examples of aluminum alkyls are trimethyl aluminum (TMA), triethyl aluminum (TEAl), triisobutyl aluminum (TiBAl) and diethyl aluminum chloride (DEAC). The preferred aluminum alkyl is TEAl.

The external electron donor acts as a stereoregulation control agent (SCA) to control the amount of atactic form of polymer produced. It may also increase the production of isotactic polymers. Organosilicon compounds are known in the art for use as electron donors. Examples of electron donors that are organosilicon compounds are disclosed in U.S. Patent Nos. 4,218,339; 4,395,360; 4,328,122; 4,473,660, 4,562,173; 4,547,552 and 4,927,797.

The electron donors included in the present invention are organosilicon compounds such as those described by the following formula:

SiR'ₘ(OR")₄₋ₘ

where R' is an alkyl group, a cycloalkyl group, an aryl group or a vinyl group, R" is an alkyl group, m is 0-4, R' may be the same or different , R" may be the same or different.

Specific examples of electron donors are diisopropyldimethoxy silane (DIDS), dicyclopentyldimethoxy silane (DCDS), cyclohexylisopropyldimethoxy silane (CIDS), di-t- butyl dimethoxy silane (DTDS) and cyclohexylmethyldimethoxy silane (CMDS).

The most significant unexpected result obtained from a process utilizing a prepolymerized catalyst is the dramatic increase in the randomness of ethylene incorporation of the co-polymer. A process utilizing a prepolymerized catalyst system is effective at ethylene incorporation levels of one to eight weight percent ethylene, preferably, two to eight weight percent ethylene and most preferably, three to six weight percent ethylene. Prepolymerization of the catalyst improves randomness at a given level of ethylene in comparison to unprepolymerized catalyst.
The prepolymerization can be any pre-polymerization technique, either ex situ or in situ, effective for a conventional supported Ziegler-Natta catalyst used for the polymerization of olefins. An example of in situ pre polymerization technique is that disclosed in U.S. Patent No. 4,767,735. An example of ex situ prepolymerization technique is disclosed in U.S. Patent No. 5,122,583.

Without limiting the scope of the claims, prepolymerization coats the catalyst particles with polymer. Without prepolymerization, unprotected high activity catalyst particles would first contact propylene at production temperatures. The rapid, uncontrolled initial polymerization under these conditions can cause the catalyst particle to literally "explode" or disintegrate.

Prepolymerization is believed to protect the catalyst as it enters the polymerization zone and prevent negative downstream effects.

Prepolymerization also helps to increase the production of fluff and to reduce fouling. Polypropylene directly from the reactor ready for further processing is known as "fluff". "Fouling" is defined as the polymer which sticks to the surface of the reactor components. The fouled polymer is not a fluff and often some material with a string-like morphology can be observed. Fouling necessitates extraction of fouled polymer from the reactor components with a solvent, thus adding to the cost of polymer production and making the process expensive. Fouled polymer is, however, readily milled into a fluff.

Ex situ prepolymerized catalyst is prepared by activating raw catalyst with small amounts of co-catalyst and external donor, prepolymerizing it with monomer, and then isolating the polymer-coated catalyst product. For polymerization, the prepolymerized catalyst is reactivated with conventional levels of co-catalyst and external donor, i.e., the total amount of co-catalyst and external donor used in the same as that for in situ prepolymerization, and introduced into the polymerization reaction in the same manner as raw catalyst. Although in situ prepolymerization is preferable for raw catalyst, it is not necessary for ex situ prepolymerized catalyst to be again prepolymerized in situ. However, ex situ pre-polymerized catalyst may be again prepolymerized in situ without negative effect on polymer properties or catalyst efficiency.

Ethylene incorporation in polypropylene introduces defects into the polymer chain and alters the thermal and mechanical properties of the polymer.

One variable of composition is the randomness of incorporation since this is believed to determine the effectiveness for creating chain defects. Randomness is increased by favoring single insertions of ethylene into the chain (i.e., between propylene units) rather than multiple or consecutive ethylene insertions.

The present invention provides a process for the co-polymerization of propylene and ethylene using a prepolymerized catalyst comprising:
a) selecting a conventional Ziegler-Natta catalyst component for the copolymerization of propylene and ethylene;
b) contacting the catalyst component with an organoaluminum co-catalyst compound to form a catalyst;
c) contacting the catalyst component with an electron donor simultaneous with or after contacting the catalyst component with the organoaluminum co-catalyst compound;
d) prepolymerizing the catalyst by contacting it with a small amount of one monomer;
e) introducing the prepolymerized catalyst into a polymerization reaction zone containing propylene and ethylene and, optionally, additional organoaluminum co-catalyst compound; and
f) extracting co-polymer product from the reactor.

The present invention also provides a process for the co-polymerization of propylene and ethylene using an ex situ prepolymerized catalyst comprising:
a) selecting a conventional Ziegler-Natta catalyst component for the copolymerization of propylene and ethylene;
b) contacting the catalyst component with an organoaluminum co-catalyst compound to form a catalyst;
c) contacting the catalyst component with an electron donor simultaneous with or after contacting the catalyst component with the organoaluminum compound;
d) prepolymerizing the catalyst by contacting it with a small amount of one monomer;
e) isolating the prepolymerized catalyst;
f) activating the prepolymerized catalyst with additional amount of organoaluminum co-catalyst compound and electron donor;
g) introducing the activated prepolymerized catalyst into a polymerization reaction zone containing propylene and ethylene; and
h) extracting co-polymer product from the reactor.

The present invention also provides a process for the co-polymerization of propylene and ethylene using as in situ prepolymerized catalyst comprising:
a) selecting a conventional Ziegler-Natta catalyst component for the copolymerization of propylene and ethylene;
b) contacting the catalyst component with an organoaluminum co-catalyst compound to form a catalyst;
c) contacting the catalyst component with an electron donor simultaneous with or after contacting the catalyst component with the organoaluminum compound;
d) prepolymerizing the catalyst by contacting it with a small amount of one monomer;
e) introducing the prepolymerized catalyst into a polymerization reaction zone containing propylene and ethylene and additional organoaluminum co-catalyst compound and electron donor; and
f) extracting co-polymer product from the reactor.

The following Examples and Comparative Examples illustrate the present invention and its various advantages in more detail. The results are summarized in Tables 1 and 2. The catalyst component used is a conventional heterogeneous Ziegler-Natta catalyst component comparable to that disclosed in U.S. Patent Nos. 4,927,797; 4,816,433 and 4,839,321.

### Preparation of Ex Situ Prepolymerized Catalyst

A sample of conventional supported Ziegler-Natta catalyst was prepolymerized with propylene. All manipulations were carried out under nitrogen using standard Schlenk and drybox techniques.

Under nitrogen, 40 mmoles of triethylaluminum (TEAl) in hexane and 2.0 mmoles of external donor (CMDS) in hexane were placed in a clean, dry flask containing a magnetic stirring bar. Additional hexane was added to increase the total solution volume to approximately 100 Ml. In a nitrogen box, the yellow raw catalyst powder was added to the TEAl/CMDS/hexane mixture to yield a brown slurry. The flask was sealed and removed to a Schlenk line where it was equipped with a mineral oil bubbler and placed in a room temperature water bath. While stirring the mixture, propylene gas was bubbled through the mixture via cannula; excess propylene flow was released through the bubbler to maintain near ambient pressure in the flask.

After one hour, the propylene flow was stopped and nitrogen was purged through the flask to remove any unreacted propylene. The mixture was allowed to settle, and the brown upper solvent layer was decanted via cannula. The solid was washed with aliquots of hexane until the washings were relatively clear and colorless. The solid was dried overnight under vacuum to yield 16.4 grams of light brown prepolymerized catalyst.

The weight of the catalyst had increased by a factor of about 3.3, thus the added polypropylene coating accounts for about 70% by weight of the prepolymerized catalyst i.e., a weight ratio of polymer coating to catalyst of about 2.3 to 1. In Examples below, 33 mgrams of prepolymerized catalyst are used so that the amount used, less the polypropylene coating is equivalent to the 10 mgrams raw (non-prepolymerized) catalyst used in the Comparative Examples below. Note that the catalyst used in the Comparative Examples is the same as that used to prepare the ex situ prepolymerized catalyst.

### EXAMPLE 1

A catalyst system was prepared in a 40 cc (1 cc = 1 cm³) reaction vessel using, in order, 1.0 mmoles triethylaluminum (TEAl) as cocatalyst, and 0.5 mmoles cyclohexylmethyldimethoxy silane (CMDS) as electron donor, and 33 mgrams of prepolymerized catalyst (above). The TEAl and CMDS submixture was allowed to contact approximately 5 minutes, and the TEAl, CMDS, and catalyst submixture was allowed to contact approximately 2 minutes. At room temperature, a two liter reaction vessel was charged with 0.8 L of heptane and a mixture of hydrogen and propylene gas flows was established through the reaction vessel under pressure control.

The hydrogen to propylene flow ratio used was 0.02. The catalyst system in the 40 cc reaction vessel was flushed into the two liter reaction vessel using 0.2 L of heptane. Ethylene was then added to the gas flow mixture and the temperature of the two liter reaction vessel was then raised to 60°C. In this Example, the ethylene to propylene flow ratio used was 0.04.

Polymerization proceeded for one hour and was then terminated by stopping the gas flows, venting the gas pressure from the reactor, and rapidly cooling the reactor to room temperature. The reaction-vessel was opened, and a large volume of methanol was added to the copolymer product slurry in the heptane solvent. The thus-obtained slurry was filtered and the solid (heptane-insoluble) copolymer was dried under vacuum. The filtrate was reduced in volume to recover the heptane soluble fraction of copolymer. Copolymer yield is given as the sum of the yields of heptane-insoluble and soluble polymers.

The catalyst efficiency was calculated by dividing the total yield of copolymer by 0.01 grams (that is, 10 mgrams, which is the weight of prepolymerized catalyst used less the weight of prepolymerized polypropylene coating). The weight percentage of ethylene incorporated into the heptane-insoluble copolymer was determined for pressed films using the intensity measurements of methylene peaks at 722 and 732 wave numbers by infrared analysis. This analysis was calibrated and standardized using the carbon 13 NMR analyses of comparable ethylene/propylene copolymers. The randomness factor was calculated by dividing the percentage for single ethylene insertions by the percentage for multiple ethylene insertions.

| SUMMARY OF POLYMERIZATION CONDITIONS FOR EXAMPLE 1 | |
|---|---|
| wt. of prepolymerized catalyst component | 33 mgrams (10 mgrams less polymer coating) |
| amount of TEAl (cocatalyst) | 1.0 mmoles |
| amount of electron donor | 0.5 mmoles |
| heptane solvent | 1 liter |
| Al/Ti∗ | 200 |
| Al/Si | 2 |
| Si/Ti∗ | 100 |
| Hydrogen: propylene flow ratio | 0.02 |
| ethylene: propylene flow ratio | 0.04 |
| polymerization temperature | 60°C |
| polymerization time | 1 hour |

| | |
|---|---|
| ∗ based on the amount of titanium in the raw catalyst. | |

### EXAMPLE 2

The procedures of Example 1 were repeated with the exception that an ethylene to propylene flow ratio of 0.06 was used.

### EXAMPLE 3

The procedures of Example 1 were repeated with the exception that an ethylene to propylene flow ratio of 0.08 was used.

### COMPARATIVE EXAMPLE 1

The procedures of Example 1 were repeated with the exception that 10 mgrams of raw (non-prepolymerized) catalyst was used.

| SUMMARY OF POLYMERIZATION CONDITIONS FOR COMPARATIVE EXAMPLE 1 | |
|---|---|
| wt. of raw (non-prepolymerized) catalyst component | 10 mgrams |
| amount of TEAl (cocatalyst) | 1.0 mmoles |
| amount of electron donor | 0.5 mmoles |
| heptane solvent | 1 liter |
| Al/Ti | 200 |
| Al/Si | 2 |
| Si/Ti | 100 |
| hydrogen: propylene flow ratio | 0.02 |
| ethylene: propylene flow ratio | 0.04 |
| polymerization temperature | 60°C |
| polymerization time | 1 hour |

### COMPARATIVE EXAMPLE 2

The procedure of Comparative Example 1 were repeated with the exception that an ethylene to propylene flow ratio of 0.06 was used.

### COMPARATIVE EXAMPLE 3

The procedure of Comparative Example 1 were repeated with the exception that an ethylene to propylene flow ratio of 0.08 was used.

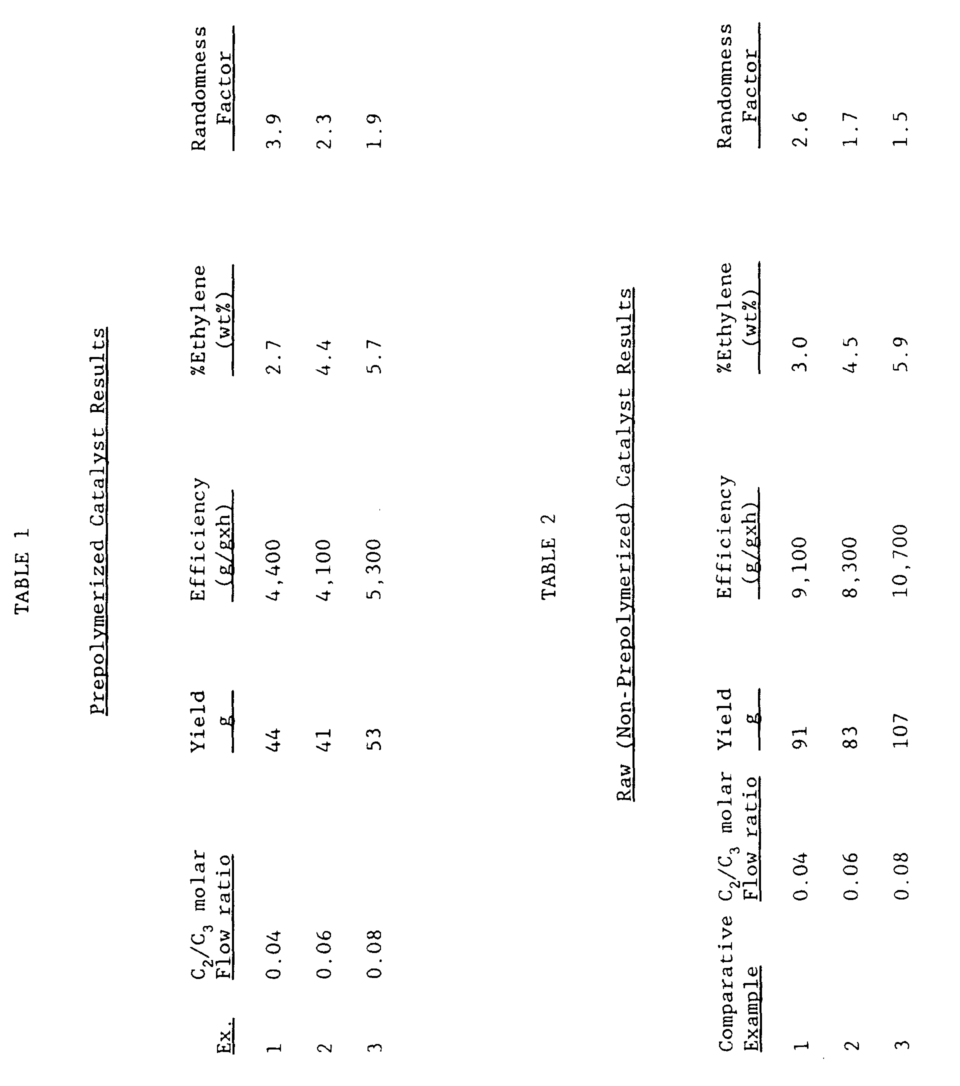

A process utilizing a prepolymerized catalyst affords approximately half the yield of raw catalyst on a per gram-catalyst basis. It is believed that, without limiting the scope of the claims, sites activated to perform the ex situ prepolymerization subsequently deactivate and lower the intrinsic activity of the catalyst. While the yield is lower, prepolymerized catalyst advantageously increases the randomness of ethylene incorporation.

Tables 1 and 2 show that a process utilizing a prepolymerized catalyst persistently affords a higher randomness factor for a given level of ethylene incorporation. A process utilizing a prepolymerized catalyst affords significantly higher single-to-multiple ratios of ethylene insertion than raw catalyst. The randomness factor is at least one when the co-polymer product has 1 wt% to 8 wt% of ethylene incorporation. The randomness factor is one to ten when the co-polymer product has two wt% to eight wt% of ethylene incorporation.
The randomness factor is 1.8 to 4.0 when the co-polymer product has 3 wt% to 6 wt% of ethylene incorporation.

## Claims

1. A process for the co-polymerization of propylene and ethylene comprising :
(a) selecting a conventional supported heterogeneous Ziegler-Natta catalyst component for copolymerization of propylene and ethylene; and
(b) contacting the catalyst with an organoaluminum co-catalyst compound to form a catalyst;
(c) contacting said catalyst component with an electron donor either simultaneously with or after step (b),
(d) prepolymerizing the catalyst by contacting it with a small amount of one monomer;
(e) introducing the prepolymerized catalyst into a polymerization reaction zone containing propylene and ethylene and, optionally, additional organoaluminum co-catalyst compound and additional electron donor, in which the propylene and ethylene are co-polymerized; and
(f) withdrawing a co-polymer product
wherein said co-polymer product has 1-8 wt% of ethylene incorporation and a randomness factor of at least 1, said randomness factor being calculated by dividing the percentage for single ethylene insertions by the percentage for multiple ethylene insertions.

2. The process of claim 1 wherein the prepolymerizing the catalyst is by ex situ prepolymerization by activating raw catalyst with co-catalyst and external donor, prepolymerizing it with a small amount of one monomer, and then isolating the polymer-coated catalyst product, in which after step d) the following steps replace steps
e) and f) of claim 1 :
e) isolating the prepolymerized catalyst;
f) activating the prepolymerized catalyst with additional amounts of organoaluminum co-catalyst compound and electron donor;
g) introducing the activated prepolymerized catalyst into a polymerization reactor zone containing propylene and ethylene in which propylene and ethylene are co-polymerized, and
h) extracting co-polymer product from the reactor
wherein the monomer of step d) is propylene and wherein said co-polymer product has 1-8 wt% of ethylene incorporation and a randomness factor of at least 1.

3. The process of claim 1 wherein the prepolymerizing the catalyst is by in situ prepolymerization by contacting catalyst with the co-catalyst, the electron donor, and a relatively small amount of the total amount of monomer to be polymerized, passing the catalyst through a tubular reactor,
and introducing the pre-polymerized catalyst into the polymerization reaction zone by a carrier stream, in which after step d) the following steps replace steps e) and f) of claim 1 :
e) introducing the prepolymerized catalyst into a polymerization reaction zone containing propylene and ethylene and additional rganoaluminum co-catalyst compound and electron donor in which the propylene and ethylene are co-polymerized; and
f) extracting co-polymer product from the reactor
wherein said co-polymer product has 1-8 wt% of ethylene incorporation and a randomness factor of at least 1.

4. The process of Claim 1 wherein the conventional supported heterogeneous Ziegler-Natta catalyst component comprises a compound of the general formula MR⁺x where M is a Group IVB metal, R⁺ is a halogen or a hydrocarbyloxy and x is the valence of M.

5. The process of Claim 4 wherein M is titanium and R⁺ is chlorine.

6. The process of Claim 1 wherein the organoaluminum co-catalyst compound is an alkylaluminum described by the formula AlR*₃ where R* is an alkyl of from 1 to 8 carbon atoms or a halogen and R* may be the same or different with at least one R* being an alkyl.

7. The process of Claim 6 wherein the organoaluminum co-catalyst compound is a trialkyl aluminum or a dialkyl aluminum halide.

8. The process of Claim 7 wherein the organoaluminum co-catalyst compound is chosen from the group consisting of trimethyl aluminum, triethyl aluminum, triisobutyl aluminum and diethyl aluminum chloride.

9. The process of Claim 8 wherein the organoaluminum co-catalyst compound is triethyl aluminum.

10. The process of Claim 1 wherein the electron donor is an organosilicon compound of the general formula SiR'ₘ(OR")₄₋ₘ wherein R' is an alkyl group, a cycloalkyl group, an aryl group or vinyl group, R" is an alkyl group, m is 0-4, R' being the same or different and R" being the same or different.

11. The process of Claim 10 wherein the electron donor is chosen from the group consisting of diisopropyldimethoxysilane, dicyclopentyldimethoxysilane, cyclohexylisopropyldimethoxysilane, di-t-butyldimethoxysilane and cyclohexylmethyldimethoxy silane.

12. The process of Claim 11 wherein the electron donor is cyclohexylmethyldimethoxy silane.

13. The process of Claim 1 wherein the co-polymer product has 2 wt% to 8 wt% of ethylene incorporation and a randomness factor of 1 to 10.

14. The process of Claim 1 wherein the co-polymer product has 3 wt% to 6 wt% of ethylene incorporation and a randomness factor of 1.8 to 4.0.

## Patentansprüche

1. Verfahren für die Copolymerisation von Propylen und Ethylen, umfassend:
(a) Auswählen einer herkömmlichen unterstützten heterogenen Ziegler-Natta Katalysatorkomponente für Copolymerisation von Propylen und Ethylen und
(b) in Kontakt bringen des Katalysators mit einer Organoaluminium-Cokatalysatorverbindung unter Bilden eines Katalysators,
(c) in Kontakt bringen der Katalysatorkomponente mit einem Elektronendonor entweder gleichzeitig mit oder nach Stufe (b),
(d) Vorpolymerisieren des Katalysators durch in Kontakt bringen dieses mit einer geringen Menge von einem Monomer,
(e) Einführen des vorpolymerisierten Katalysators in eine Polymerisationsreaktionszone, enthaltend Propylen und Ethylen und wahlfrei zusätzliche Organoaluminium-Cokatalysatorverbindung und zusätzlichen Elektronendonor, in der das Propylen und Ethylen copolymerisiert werden, und
(f) Abziehen eines Copolymerprodukts, wobei das Copolymerprodukt 1-8 Gew.% Ethyleneinfügung und einen Zufälligkeitsfaktor von mindestens 1 hat, wobei der Zufälligkeitsfaktor durch Dividieren des Prozentsatzes für Einzelethyleneinfügungen durch den Prozentsatz für Mehrfachethyleneinfügungen berechnet wird.

2. Verfahren nach Anspruch 1, wobei das Vorpolymerisieren des Katalysators durch ex situ Vorpolymerisation ist durch Aktivieren von Rohkatalysator mit Cokatalysator und Außendonor, Vorpolymerisieren dieses mit einer geringen Menge eines Monomeren und dann Isolieren des Polymer-überzogenen Katalysatorprodukts, bei dem nach Stufe d) die folgenden Stufen Stufen e) und f) von Anspruch 1 ersetzen:
e) Isolieren des vorpolymerisierten Katalysators,
f) Aktivieren des vorpolymerisierten Katalysators mit zusätzlichen Mengen von Organoaluminium-Cokatalysatorverbindung und Elektronendonor;
g) Einführen des aktivierten vorpolymerisierten Katalysators in eine Polymerisationsreaktorzone, enthaltend Propylen und Ethylen, in der Propylen und Ethylen copolymerisiert werden, und
h) Extrahieren von Copolymerprodukt aus dem Reaktor, wobei das Monomer von Stufe d) Propylen ist, und wobei das Copolymerprodukt 1-8 Gew.% Ethyleneinfügung und einen Zufälligkeitsfaktor von mindestens 1 hat.

3. Verfahren nach Anspruch 1, wobei das Vorpolymerisieren des Katalysators durch in situ Vorpolymerisation ist durch in Kontakt bringen von Katalysator mit dem Cokatalysator, dem Elektronendonor und einer relativ geringen Menge der Gesamtmenge von zu polymerisierendem Monomer, Durchleiten des Katalysators durch einen röhrenförmigen Reaktor, und Einführen des vorpolymerisierten Katalysators in die Polymerisationsreaktionszone durch einen Trägerstrom, in der nach Stufe d) die folgenden Stufen Stufen e) und f) von Anspruch 1 ersetzen:
e) Einführen des vorpolymerisierten Katalysators in eine Polymerisationsreaktionszone, enthaltend Propylen und Ethylen und zusätzliche Organoaluminium-Cokatalysatorverbindung und Elektronendonor, in der das Propylen und Ethylen copolymerisiert werden, und
f) Extrahieren von Copolymerprodukt aus dem Reaktor, wobei das Copolymerprodukt 1-8 Gew.% Ethyleneinfügung und einen Zufälligkeitsfaktor von mindestens 1 hat.

4. Verfahren nach Anspruch 1, wobei die herkömmliche unterstützte heterogene Ziegler-Natta Katalysatorkomponente eine Verbindung der allgemeinen Formel MR⁺ₓ umfaßt, wobei M ein Gruppe IVB Metall ist, R⁺ ist ein Halogen oder ein Hydrocarbyloxy, und x ist die Werigkeit von M.

5. Verfahren nach Anspruch 4, wobei M Titan ist, und R⁺ ist Chlor.

6. Verfahren nach Anspruch 1, wobei die Organoaluminium-Cokatalysatorverbindung ein Alkylaluminium ist, beschrieben durch die Formel AlR*₃, wobei R* ein Alkyl mit 1 bis 8 Kohlenstoffatomen oder ein Halogen ist, und R* kann gleich oder unterschiedlich sein, wobei mindestens ein R* ein Alkyl ist.

7. Verfahren nach Anspruch 6, wobei die Organoaluminium-Cokatalysatorverbindung ein Trialkylaluminium- oder ein Dialkylaluminiumhalogenid ist.

8. Verfahren nach Anspruch 7, wobei die Organoaluminium-Cokatalysatorverbindung ausgewählt wird aus der Gruppe, bestehend aus Trimethylaluminium-, Triethylaluminium-, Triisobutylaluminium- und Diethylaluminiumchlorid.

9. Verfahren nach Anspruch 8, wobei die Organoaluminium-Cokatalysatorverbindung Triethylaluminium ist.

10. Verfahren nach Anspruch 1, wobei der Elektronendonor eine Organosiliciumverbindung der allgemeinen Formel SiR'ₘ(OR")₄₋ₘ ist, wobei R' eine Alkylgruppe, eine Cycloalkylgruppe, eine Arylgruppe oder Vinylgruppe ist, R" ist eine Alkylgruppe, m ist 0-4, R' ist geich oder unterschiedlich, und R" ist gleich oder unterschiedlich.

11. Verfahren nach Anspruch 10, wobei der Elektronendonor ausgewählt wird aus der Gruppe, bestehend aus Diisopropyldimethoxysilan, Dicyclopentyldimethoxysilan, Cyclohexylisopropyldimethoxysilan, Di-t-Butyldimethoxysilan und Cyclohexylmethyldimethoxysilan.

12. Verfahren nach Anspruch 11, wobei der Elektronendonor Cyclohexylmethyldimethoxysilan ist.

13. Verfahren nach Anspruch 1, wobei das Copolymerprodukt 2 Gew.% bis 8 Gew.% Ethyleneinfügung und einen Zufälligkeitsfaktor von 1 bis 10 hat.

14. Verfahren nach Anspruch 1, wobei das Copolymerprodukt 3 Gew.% bis 6 Gew.% Ethyleneinfügung und einen Zufälligkeitsfaktor von 1,8 bis 4,0 hat.

## Revendications

1. Procédé de copolymérisation du propylène et de l'éthylène comprenant:
(a) choisir un composant de catalyseur de Ziegler-Natta hétérogène sur support habituel pour la copolymérisation du propylène et de l'éthylène; et
(b) mettre en contact le catalyseur avec un composé de co-catalyseur d'organoaluminium pour former un catalyseur;
(c) mettre en contact ce composant de catalyseur avec un donneur d'électrons soit en même temps soit après l'étape (b);
(d) prépolymériser le catalyseur en le mettant en contact avec une petite quantité d'un monomère;
(e) introduire le catalyseur prépolymérisé dans une zone de réaction de polymérisation contenant du propylène et de l'éthylène et, facultativement, du composé de co-catalyseur d'organoaluminium supplémentaire et du donneur d'électrons supplémentaire dans laquelle le propylène et l'éthylène sont copolymérisés; et
(f) retirer un produit copolymère où ce produit copolymère comprend 1 à 8% en poids d'incorporation d'éthylène et un facteur aléatoire d'au moins 1, cet facteur aléatoire étant calculé en divisant le pourcentage des insertions d'éthylène seule par le pourcentage des insertions d'éthylène multiples.

2. Le procédé de la revendication 1 dans lequel la prépolymérisation du catalyseur se fait par prépolymérisation ex situ en activant un catalyseur brut avec un co-catalyseur et un donneur externe, en prépolymérisant celui-ci avec une petite quantité d'un monomère, et ensuite en isolant le produit de catalyseur enduit de polymère, où après l'étape d) les étapes suivantes remplacent les étapes e) et f) de la revendication 1:
e) isoler le catalyseur prépolymérisé;
f) activer le catalyseur prépolymérisé avec des quantités supplémentaires de composé de co-catalyseur d'organoaluminium et de donneur d'électrons;
g) introduire le catalyseur prépolymérisé activé dans une zone de réaction de polymérisation contenant du propylène et de l'éthylène dans laquelle le propylène et l'éthylène sont copolymérisés; et
h) extraire le produit copolymère du réacteur où le monomère de l'étape d) est le propylène et où le produit copolymère comprend 1 à 8% en poids d'incorporation d'éthylène et un facteur aléatoire d'au moins 1.

3. Procédé de la revendication 1 dans lequel la prépolymérisation du catalyseur se fait par prépolymérisation in situ par mise en contact du catalyseur avec le co-catalyseur, le donneur d'électrons et une quantité relativement petite de la quantité totale de monomère à polymériser, faire passer le catalyseur au travers d'un réacteur tubulaire, et introduire le catalyseur prépolymérisé dans la zone de réaction de polymérisation par un courant véhicule, dans laquelle après l'étape d) les étapes suivantes remplacent les étapes e) et f) de la revendication 1:
e) introduire le catalyseur prépolymérisé dans une zone de réaction de polymérisation contenant du propylène et de l'éthylène et un composé de co-catalyseur d'organoaluminium et de donneur d'électrons où le propylène et l'éthylène sont copolymérisés; et
f) extraire le produit copolymère du réacteur où ce produit copolymère comprend 1 à 8% en poids d'incorporation d'éthylène et un facteur aléatoire d'au moins 1.

4. Le procédé de la revendication 1 où le composé de catalyseur de Ziegler-Natta hétérogène sur support habituel comprend un composé de la formule générale MR⁺x où M est un métal du groupe IVB, R⁺ est un halogène ou un hydrocarbyloxy et x est la valence de M.

5. Procédé selon la revendication 4 où M est le titane et R⁺ est le chlore.

6. Procédé selon la revendication 1 où le composé de co-catalyseur d'organoaluminium est un alkylaluminium décrit par la formule AlR*₃ où R* est un alkyle de 1 à 8 atomes de carbone ou un halogène et R* peut être le même ou différent avec au moins un R* étant un alkyle.

7. Procédé selon la revendication 6 dans lequel le composé de co-catalyseur d'organoaluminium est le trialkylaluminium ou un halogénure de dialkylaluminium.

8. Procédé selon la revendication 7 dans lequel le composé de co-catalyseur d'organoaluminium est choisi dans le groupe consistant en triméthylaluminium, triéthylaluminium, triisobutylaluminium et chlorure de diéthylaluminium.

9. Procédé selon la revendication 8 dans lequel le composé de co-catalyseur d'organoaluminium est le triéthylaluminium.

10. Procédé selon la revendication 1 dans lequel le donneur d'électrons est un composé d'organosilicium de la formule générale SiR'ₘ(OR")₄₋ₘ où R' est un groupe alkyle, un groupe cycloalkyle, un groupe aryle ou un groupe vinyle, R" est un groupe alkyle, m est 0-4, R' étant le même ou différent et R" étant le même ou différent.

11. Procédé selon la revendication 10 dans lequel le donneur d'électrons est choisi dans le groupe consistant en diisopropyldiméthoxysilane, dicyclopentyldiméthoxysilane, cyclohexylisopropyldiméthoxysilane, di-t-butyldiméthoxysilane et cyclohexylméthyldiméthoxysilane.

12. Procédé selon la revendication 11 dans lequel le donneur d'électrons est le cyclohexylméthyldiméthoxysilane.

13. Procédé selon la revendication 1 dans lequel le produit copolymère comprend 2% à 8% en poids d'incorporation d'éthylène et un facteur aléatoire de 1 à 10.

14. Procédé de la revendication 1 dans lequel le produit copolymère comprend 3% à 6% en poids d'incorporation d'éthylène et un facteur aléatoire de 1,8 à 4,0.
